# EUROPEAN PATENT APPLICATION

(11) **EP 4 821 595 A1**
(43) Date of publication of application: **14.10.2026**
(21) Application number: 25169761.1
(22) Date of filing: 10.04.2025
(51) Int. Cl.: B01J 23/42, B01J 23/46, B01J 23/63, B01J 23/96, C01B 21/26, C22B 7/00, C22B 11/02

(54) **SYSTEM AND METHOD FOR RECOVERING VOLATILE PT, PD AND/OR RH**

(71) Applicant: Yara International ASA, 0277 Oslo (NO)
(72) Inventor: WALLER, David, 0277 Oslo (NO)
(74) Representative: De Clercq & Partners

(57) **Abstract**

The present disclosure discloses a catalytic system comprising: a Pt-containing, Pd-containing, and/or Rh-containing catalyst; and a recovery system downstream of the catalyst;
wherein the recovery system comprises at least one oxide of formula A'₁₋ₓA"ₓBO₃, with A' being selected from lanthanoids, preferably A' being selected from La, Sm and Gd; A" being selected from alkaline earth metals, preferably A" being Sr or Ca; B being selected from 3d-5d elements, preferably B being selected from Cr, Mn, Fe, and Co; and wherein x = 0 to 1. The present disclosure further relates to the use of said oxides for recovering volatile Pt, Pd and/or Rh and to a method for recovering volatile Pt, Pd and/or Rh.

## Description

### TECHNICAL FIELD

The present application is in the field of the recovery of volatile precious metals, particularly volatile Pt, Pd and/or Rh from a gas phase.

### BACKGROUND

Several chemical reactions on an industrial scale often rely on catalysts to proceed at an acceptable rate and to produce the desired products. Such catalysts are often based upon precious metals commonly known as platinum group metals. The six platinum-group metals are ruthenium (Ru), rhodium (Rh), palladium (Pd), osmium (Os), iridium (Ir), and platinum (Pt). Amongst these metals, platinum (Pt), palladium (Pd) and rhodium (Rh) are commonly used as catalysts in the Ostwald process for nitric acid production, for oxidising ammonia into nitric oxide, and in the Andrussow process for hydrogen cyanide production, for reacting ammonia with oxygen and methane.

A problem associated with catalysis using platinum group metals, particularly Pt, Pd and Rh is that due the high temperature at which catalysis is performed, for example from 700 to 950 °C or over 1000 °C or over 1100 °C, some of these metals evaporate and get lost in the reactors, in particular when the catalysis is performed in the presence of oxygen. There are different Pt, Pd and/or Rh catchment systems that have been utilized industrially to reduce the loss of these metals.

The recovery of volatile platinum containing catalyst systems is well documented. For example, GB1343637 relates to a process and a related device for recovering platinum metals entrained in a hot gas stream (as in the manufacture of nitric acid) wherein the gas is passed through a gettering device in the form of an inert ceramic honeycomb structure which is coated with a getter containing Pd to absorb the volatile platinum.

EP0063450 generally discloses a getter device and a related process for recovery of a precious metal lost from a precious metal-containing catalyst operating at elevated temperature, wherein the getter comprises an agglomeration or assemblage of unwoven fibres made from a metal selected from the group ruthenium, palladium, iridium, platinum, gold, silver, rhodium and alloys containing one or more or the said metals. The document primarily focuses on Pd/Au alloys.

GB668935 relates to a process and related device for platinum recovery of volatilized platinum, originating from a catalyst. In this context, GB668935 claims a process for recovery of platinum, wherein the platinum is trapped on the surface of baffles, disposed at a place where the temperature is at least 700 °C and wherein some of the baffles have a coating of silver or of a silver alloy with gold, palladium or platinum.

US20130149207 relates to an exhaust system arrangement comprising a Pt and Pd catalyst and a downstream SCR catalyst and a component capable of trapping and/or alloying with a gas phase platinum group metal, wherein this component is typically a metal selected from the group consisting of gold, palladium and silver, preferably a Pd/Au alloy.

On the side of rhodium capture, US4774069A discloses a process for the manufacture of nitric oxide by oxidising ammonia in the presence of a catalyst comprising platinum and from 0 to 20 wt % of rhodium and from 0 to 40 wt % of palladium (based on the weight of alloy), the catalyst being located upstream from a catchment trap for scavenging platinum or rhodium lost from the catalyst. The catchment trap comprises an alloy of Pd with at least one compound selected from the group consisting of the oxides, borides, carbides, silicides, nitrides and silicates of aluminum, zirconium, boron, silicon, magnesium, titanium, yttrium, beryllium, thorium, manganese, lanthanum, scandium, calcium, uranium, chromium, niobium, and hafnium.

Palladium occupies an important place in numerous industries and is known for its potent catalytic properties in a variety of organic reactions and is exploited as a stable oxidation catalyst in catalytic converters. Most of the global palladium demand is for producing the oxidation catalyst. However, the recycled palladium in spent catalyst material is less than the global consumption. Around the world, the resources of palladium are scarce. The proven reserves of palladium worldwide are 67,000 tons, which is less than that of gold (USGS Survey, 2017). Generally, the ores deposits containing 0.001% (namely 10 g/t) of palladium possess the value of exploitation. It was reported by Johnson Matthey that, in 2012, gross demands for Pd, in the field of auto-exhaust catalyst was 216.8 tons (72% of gross Pd demand). The unrelenting demand for platinum group metals, particularly Pd, has resulted in record prices and their supply is plagued with concerns over the environmental impact of their production and finite natural supply. Pd lost in the ammonia oxidation burners is known to be captured by periodically collecting dust in downstream filters and washing the internal pipe work and heat exchangers downstream of the burner. For this reason, the efficient recycling of palladium in catalyst material could generate substantial environmental and economic benefits.

It remains an important task to find alternative and improved ways for the capture of precious metals, especially Pt, Pd and/or Rh, that get lost from catalysts during high temperature industrial processes. Thus, it is of great interest to recover as much volatile precious metals as possible. There is a need in the art for compounds and materials for recovering volatile Pt, Pd and/or Rh that are chemically and mechanically stable under ambient air.

### SUMMARY

The present application addresses one or more of the above indicated needs. The inventor has surprisingly found that certain metal oxides, as further defined herein, are stable, specific and effective recovery agents for recovering the precious metals, in particular Pt, Pd, and/or Rh, lost in the gas phase. In particular, the inventor has surprisingly found that the metal oxides as envisaged herein are able to form a solid composition comprising the at least one metal oxide and volatile Pt, Pd and/or Rh, wherein said oxide is bonded with the Pt, Pd and/or Rh.

In one aspect of the disclosure, a catalytic system is disclosed. The catalytic system comprises:
- a Pt-containing, Pd-containing, and/or Rh-containing catalyst; and
- a recovery system downstream of the catalyst;
wherein the recovery system comprises at least one oxide of formula A'₁₋ₓA"ₓBO₃, with:
° A' being selected from lanthanoids, preferably A' being selected from La, Sm and Gd;
° A" being selected from alkaline earth metals, preferably A" being Sr or Ca;
° B being selected from 3d-5d elements, preferably B being selected from Cr, Mn, Fe, and Co; more preferably B being selected from Cr, Mn and Fe, or selected from Cr and Mn, and
° wherein x = 0 to 1, preferably wherein x = 0 to 0.5 or 0 < x ≤ 0.5.

In one embodiment according to the catalytic system of the disclosure, the recovery system comprises at least one oxide of formula A'BO₃ when x = 0, wherein A' = La, Sm or Gd, B = Cr, Mn, Fe or Co, particularly wherein B = Cr, Mn or Fe, even more particularly wherein B = Cr or Mn, yet even more particularly wherein the at least one oxide of formula A'BO₃ is selected from the group consisting of LaCrO₃, LaMnO₃, SmCrO₃ and GdCrO₃.

In one embodiment according to the catalytic system of the disclosure, the recovery system comprises at least one oxide of formula A'₁₋ₓA"ₓBO₃ wherein A' = La, A" = Sr; B = Cr, Mn, Fe, or Co, particularly wherein B = Cr, Mn, or Fe, even more particularly wherein B = Cr or Mn, yet even more particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}MnO₃, La_{0.5}Sr_{0.5}MnO₃, La_{0.8}Sr_{0.2}FeO₃, La_{0.5}Sr_{0.5}FeO₃, La_{0.8}Sr_{0.2}CoO₃, and La_{0.6}Sr_{0.4}CoO₃.

In one embodiment according to the catalytic system of the disclosure, the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃.

In one embodiment according to the catalytic system of the disclosure, the catalytic system is a system for the catalytic conversion of ammonia into nitric oxide, for the generation of nitric acid, or wherein the catalytic system is a system for the catalytic conversion of ammonia, oxygen and methane, for the generation of hydrogen cyanide.

In one embodiment according to the catalytic system of the disclosure, the Pt-containing, Pd-containing and/or Rh-containing catalyst is in the form of catalytic gauze, and wherein the recovery system has the shape of a honeycomb, a tablet, a pellet, a sponge, a foam, a net, a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys, and chromium-aluminium-iron alloys.

In one aspect of the disclosure, use of a recovery system comprising at least one oxide of formula A'₁₋ₓA"ₓBO₃ with A' being selected from lanthanoids, preferably A' being selected from La, Sm and Gd; A" being selected from alkaline earth metals, preferably A" being Sr or Ca; B being selected from 3d-5d elements, preferably B being selected from Cr, Mn, Fe, and Co more preferably B being selected from Cr, Mn and Fe, or selected from Cr and Mn; and wherein x = 0 to 1, preferably wherein x = 0 to 0.5 or 0 < x ≤ 0.5, for recovering volatile Pt, Pd and/or Rh, is disclosed.

In one embodiment according to the use of the disclosure, the recovery system comprises at least one oxide of formula A'BO₃ when x = 0 wherein A' = La, Sm or Gd, B = Cr, Mn, Fe or Co, particularly wherein B = Cr, Mn or Fe, even more particularly wherein B = Cr or Mn, yet even more particularly wherein the at least one oxide of formula A'BO₃ is selected from the group consisting of LaCrO₃, LaMnO₃, SmCrO₃ and GdCrO₃.

In one embodiment according to the use of the disclosure, the recovery system comprises at least one oxide of formula A'₁₋ₓA"ₓBO₃ wherein A' = La, A" = Sr, B = Cr, Mn, Fe, or Co, particularly wherein B = Cr, Mn, or Fe, even more particularly wherein B = Cr or Mn, yet even more particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}MnO₃, La_{0.5}Sr_{0.5}MnO₃, La_{0.8}Sr_{0.2}FeO₃, La_{0.5}Sr_{0.5}FeO₃, La_{0.8}Sr_{0.2}CoO₃, and La_{0.6}Sr_{0.4}CoO₃.

In one embodiment according to the use of the disclosure, the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃.

In one embodiment according to the use of the disclosure, volatile Pt, Pd and/or Rh is generated from the catalytic oxidation of ammonia into nitric oxide or wherein volatile Pt, Pd and/or Rh is generated from the catalytic reaction of ammonia with oxygen and methane, thereby generating hydrogen cyanide.

In one embodiment according to the use of the disclosure, the recovery system has the shape of a honeycomb, a tablet, a pellet, a sponge, a foam, a net, a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys, and chromium-aluminium-iron alloys.

In one aspect of the disclosure, a method for oxidising ammonia into nitric oxide or for reacting ammonia with oxygen and methane, thereby generating hydrogen cyanide, is disclosed. The method comprises the steps:
a) catalytically oxidising ammonia into nitric oxide, particularly in the production of nitric acid at a temperature ranging from 700 to 1100°C, more preferably from 700 to 950°C; or catalytically reacting ammonia with oxygen and methane thereby generating hydrogen cyanide, whereby volatile Pt, Pd and/or Rh is generated, particularly with a Pt-containing, Pd-containing and/or Rh-containing catalytic system;
b) contacting the volatile Pt, Pd and/or Rh generated in step a) with a recovery system comprising at least one oxide of formula A'₁₋ₓA"ₓBO₃, with A' being selected from lanthanoids, preferably A' being selected from La, Sm and Gd, A" being selected from alkaline earth metals, preferably A" being Sr or Ca, B being selected from 3d-5d elements, preferably B being selected from Cr, Mn, Fe, and Co, more preferably B being selected from Cr, Mn and Fe, or selected from Cr and Mn, wherein x = 0 to 1, preferably wherein x = 0 to 0.5 or 0 < x ≤ 0.5; and
c) forming a solid composition comprising the at least one oxide and volatile Pt, Pd and/or Rh, wherein said oxide is bonded with volatile Pt, Pd and/or Rh.

In one embodiment according to the method of the disclosure, the method further comprises the step of d) recovering volatile Pt, Pd and/or Rh from the solid composition comprising at least one oxide and volatile Pt, Pd and/or Rh.

In one embodiment according to the method of the disclosure, in step b) the recovery system comprises at least one oxide of formula A'BO₃ when x = 0, wherein A' = La, Sm or Gd, B = Cr, Mn, Fe or Co, particularly wherein B = Cr, Mn or Fe, even more particularly wherein B = Cr or Mn, yet even more particularly wherein the at least one oxide of formula A'BO₃ is selected from the group consisting of LaCrO₃, LaMnO₃, SmCrO₃ and GdCrO₃.

In one embodiment according to the method of the disclosure, in step b) the recovery system comprises at least one oxide of formula A'₁₋ₓA"ₓBO₃ wherein A' = La, A" = Sr, B = Cr, Mn, Fe, or Co, particularly wherein B = Cr, Mn, or Fe, even more particularly wherein B = Cr or Mn, yet even more particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}CoO₃, La_{0.6}Sr_{0.4}CoO₃, La_{0.8}Sr_{0.2}FeO₃, La_{0.5}Sr_{0.5}FeO₃, La_{0.8}Sr_{0.2}MnO₃, and La_{0.5}Sr_{0.5}MnO₃.

In one embodiment according to the method of the disclosure, in step b) the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃.

In one embodiment according to the method of the disclosure, step a) is performed with a catalytic gauze, and step b) is performed with a recovery system that has the shape of a honeycomb, a tablet, a pellet, a sponge, a foam, a net, a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys, and chromium-aluminium-iron alloys.

In one embodiment according to the method of the disclosure, step a) comprises catalytically oxidising ammonia into nitric oxide at a temperature ranging from 700 to 950 °C, particularly at a pressure ranging between 2 bar and 20 bar.

In one embodiment according to the method of the disclosure, step a) comprises catalytically reacting ammonia with oxygen and methane thereby generating hydrogen cyanide, at a temperature ranging from 700 to 1100 at pressures °C, more preferably from 1000 to 1100°C.

### DETAILED DESCRIPTION

Throughout the description and claims of the present disclosure, the words "comprise," and variations thereof mean "including but not limited to," and they are not intended to exclude other moieties, additives, components, integers, or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All the features disclosed in this disclosure (including the description, claims, abstract and drawing), and/or all the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" or "= ... to ..." as used when referring to a range for a measurable value, such as a parameter, an amount, a time period, and the like, is intended to include the limits associated to the range that is disclosed.

The present application provides a system and a method for the recovery of one or more volatile platinum group metals, particularly Pt, Pd and/or Rh present in a gas phase.

In one aspect of the disclosure, a catalytic system is disclosed. The catalytic system comprises:
- a Pt-containing, Pd-containing, and/or Rh-containing catalyst; and
- a recovery system downstream of the catalyst;
wherein the recovery system comprises at least one oxide of formula A'₁₋ₓA"ₓBO₃, with:
° A' being selected from lanthanoids, preferably A' being selected from La, Sm and Gd;
° A" being selected from alkaline earth metals, preferably A" being Sr or Ca;
° B being selected from 3d-5d elements, preferably B being selected from Cr, Mn, Fe, and Co; more preferably B being selected from Cr, Mn and Fe, or selected from Cr and Mn, and
° wherein x = 0 to 1, preferably wherein x = 0 to 0.5 or 0 < x ≤ 0.5.

By a catalytic system, it is meant a system comprising a catalyst with which the chemical activation barrier for reacting two chemicals is lowered such that the reaction can be performed using less energy. The catalyst as considered herein comprises at least Pt, Pd and/or Rh, but may contain other metals or metal containing compounds, including but not limited to other platinum group metals such as Ir, Ru, Os and/or other metals such as Au, Ar, Cu, Fe, Ni, Co and the like and/or compounds or alloys containing one or more of said metals. In the context of the present disclosure the catalytic system is present in a catalytic reactor, such as ammonia oxidation burner, for catalytic conversion of ammonia into nitric oxide, for the generation of nitric acid or the catalytic system is present in a catalytic reactor for catalytic conversion of ammonia, oxygen and methane, for the generation of hydrogen cyanide. During operation of the catalyst in said catalytic reactors at least volatile Pt, Pd and/or Rh are generated in the gas phase. The present invention thus considers an ammonia oxidation burner comprising a catalytic system according to the present disclosure, or a reactor for the production of hydrogen cyanide comprising a catalytic system according to the present disclosure.

In one embodiment according to the catalytic system of the disclosure, the catalytic system is a system for the catalytic conversion of ammonia into nitric oxide, for the generation of nitric acid, or the catalytic system is a system for the catalytic conversion of ammonia, oxygen and methane, for the generation of hydrogen cyanide.

By recovery system, it is meant a system in which the volatile catalyst metals, particularly the volatile platinum group metals, more in particular volatile Pt, Pd and/or Rh, present in the gas phase and generated as a by-product during a catalytic reaction in the catalytic reactors, are recovered. The recovery system according to the present disclosure, positioned downstream of the catalyst, particularly recovers at least Pt, Pd and/or Rh by retaining or capturing at least Pt, Pd and/or Rh onto at least one metal oxide, in particular by incorporating Pt, Pd and/or Rh into the crystal lattice of at least one metal oxide forming a complex or a solid composition.

As used herein, the terms "recover", "recovery" are used interchangeably with the terms "capture"," capturing," "catchment," "retain"," retaining," or "trapping". These terms are used in the meaning that the element that is recovered or captured by a recovery system according to the present disclosure is incorporated into the metal oxide crystal lattice forming a complex or a solid composition with the metal oxide. The recovery or capture of a particular element by a recovery system can be determined by various techniques known to the skilled person that includes scanning electron microscope (SEM) with energy dispersive X-ray fluorescence analysis (EDS), X-Ray diffraction (XRD) analysis, Inductively Coupled Plasma Mass spectroscopy (ICP-MS) etc., typically by comparing the data obtained by these techniques before and after contacting the recovery system according to the present application with a gas comprising one or more volatile platinum group metals, particularly Pt, Pd and/or Rh. In the context of the present disclosure, Inductively Coupled Plasma Mass spectroscopy (ICP-MS) technique is used for performing quantitative analysis. As known to the skilled person, ICP-MS is an analytical technique that combines plasma ionization with mass spectrometry. It can provide highly sensitive and accurate quantitative analysis of multiple elements simultaneously, including precious metals, particularly Pt, Pd and/or Rh present in catalytic reactors.

In the context of the present disclosure "lanthanoid" is to be understood as meaning a series of chemical elements of atomic numbers 57-71, from lanthanum through lutetium. Preferably the "lanthanoids" in the context of the invention are selected from La, Sm, and Gd.

In the context of the invention "alkaline earth metal" is to be understood as meaning the chemical elements from Group 2 of the periodic table. Preferably the "alkaline earth metal" in the context of the invention is Sr or Ca.

In the context of the invention "3d-5d elements" is to be understood as meaning that 3d-5d elements refer to 3d, 4d and 5d elements in the periodic table, particularly 3d, 4d or 5d elements belonging to groups 6, 7, 8 or 9 of the periodic table. In particular embodiments, the 3d-5d elements are 3d-elements. Preferably the "3d-5d elements" in the context of the invention are selected from Cr, Mn, Fe, and Co. In more particular embodiments, the 3d-5d elements are 3d, 4d or 5d elements belonging to groups 6, 7 or 8 of the periodic table. In even more particular embodiments, the 3d-5d elements, particularly 3d elements, are selected from Cr, Mn and Fe.

The present disclosure addresses the recovery of at least volatile Pt, Pd and/or Rh from a gas phase. Two very well know industrial production processes that involve generation of volatile Pt, Pd and/or Rh are Ostwald process for the production of nitric acid and Andrussow process for the production of hydrogen cyanide. Both processes involve the presence of a precious metal containing catalyst, in particular a Pt-containing, a Pd-containing and/or a Rh-containing catalyst and are performed at high temperatures. During the operation of these processes, volatile precious metals are generated and are carried downstream in the reactors. In the absence of a recovery system they would be lost somewhere in the plant. In the production of nitric acid according to the Ostwald process, the first step involves the reaction of gaseous ammonia with gaseous oxygen provided, for example, through air onto a Pt-containing, a Pd-containing and/or a Rh-containing catalyst, thereby producing gaseous nitric oxide. The catalyst comprising Pt, Pd and/or Rh usually is part of a so-called ammonia oxidation burner in which the Pt-containing, a Pd-containing and/or a Rh-containing catalyst is located at the top surface of a burner basket and supported by Raschig rings or catalyst particles, for example, for N₂O gas conversion and abatement located inside the burner basket. After contacting the catalyst, the ammonia and oxygen react at suitable temperatures and pressures as known to the skilled person to form gaseous nitric oxide, which passes through the burner basket and is further subject to the subsequent steps of the nitric acid production process. EP3727667A1 and WO2004/005187A1 describe potential designs for the ammonia oxidation burner basket. In the production of hydrogen cyanide according to the Andrussow process, gaseous ammonia, oxygen and methane are fed to a reactor and subsequently reacted in the reactor onto a catalyst bed comprising Pt, Pd and/or Rh gauzes at suitable temperatures and pressures as known to the skilled person. The catalytic system of the present disclosure is particularly helpful for performing Ostwald and Andrussow processes generating nitric acid and hydrogen cyanide respectively, particularly for recovering at least volatile Pt, Pd and/or Rh generated during these processes.

The inventor has found that the oxides of certain metals, in particular at least one oxide of formula A'₁₋ₓA"ₓBO₃ as disclosed herein, specifically retain at least volatile Pt, Pd and/or Rh, thereby allowing to recover the volatile Pt, Pd and/or Rh that would otherwise be lost in the gas phase. The recovery is such that the oxide of formula A'₁₋ₓA"ₓBO₃ is able to bond with at least one of volatile Pt, Pd and/or Rh, forming complexes or solid compositions, as evaluated by bulk chemical analysis, particularly inductively coupled plasma spectroscopy (ICP-MS). Advantageously, the formed complexes or solid compositions are stable upon shutdown of the reactor and upon exposure to ambient temperature and ambient air. The complexes or solid compositions do not hydrate and do not become brittle or dusty. Thereby, both emissions in the air and loss of precious and expensive metals are mitigated.

Different oxides of formula A'₁₋ₓA"ₓBO₃ are considered herein.

In one embodiment according to the catalytic system of the disclosure, when x = 0, the recovery system comprises at least one oxide of formula A'BO₃ wherein A' = La, Sm or Gd, B = Cr, Mn, Fe or Co, particularly wherein B = Cr, Mn or Fe, even more particularly wherein B = Cr or Mn, yet even more particularly wherein the at least one oxide of formula A'BO₃ is selected from the group consisting of LaCrO₃, LaMnO₃, SmCrO₃ and GdCrO₃.

In one embodiment according to the catalytic system of the disclosure, the oxide of formula A'BO₃ is in a form of a perovskite.

In the context of the invention "perovskite" is to be understood as meaning that a perovskite is a compound, ABX₃, that belong to the class of compounds that take a perovskite type structure. When X = O, the perovskite is an oxide ABO₃. In the ideal perovskite structure, the B-site cation is 6-coordinated to oxygen and A-site is 12-coordinated to oxygen. A site cation is generally from alkali earth, alkaline earth, and rare earth elements whereas B site cation is generally selected from 3d-5d elements, p-block elements. The perovskite oxide can have lower symmetry, being distorted, and may have oxygen vacancies in random or ordered patterns.

As known to the skilled person, the A'BO₃ perovskites can be doped with alkaline earth metals, wherein alkaline earth metal atoms are intentionally introduced in the A'BO₃ perovskite, to form the doped oxides of A'BO₃ perovskites. The doped oxides of A'BO₃ perovskites can be of the formula A'₁₋ₓA"ₓBO₃, wherein, in particular, 0 < x ≤ 0.5 or 0 < x < 0.5. The doping can be carried out by the any process as known to the skilled person such as spray pyrolysis, complexation, coprecipitation, modified combustion method etc.

In the context of the present disclosure, the perovskites such as LaCrO₃, LaMnO₃, LaFeO3, LaCoO₃ were doped with alkaline earth metal, particularly strontium to obtain compounds of formula La₁₋ₓSrₓCrO₃, La₁₋ₓSrₓMnO₃, La₁₋ₓSrₓFeO₃ and La₁₋ₓSrₓCoO₃ respectively, wherein, in particular, 0 < x ≤ 0.5 or 0 < x < 0.5. Stated differently, the oxides of formula A'₁₋ₓA"ₓBO₃ are selected from the group consisting of La₁₋ₓSrₓCrO₃, La₁₋ₓSrₓMnO₃, La₁₋ₓSrₓFeO₃ and La₁₋ₓSrₓCoO₃ when A' = La, A" = Sr, B = Cr, Mn, Fe, or Co. Stated differently, in certain embodiments of the catalytic system of the disclosure, the recovery system comprises at least one oxide of formula La₁₋ₓSrₓBO₃, wherein B = Cr, Mn, Fe, or Co, particularly wherein B = Cr, Mn, or Fe, even more particularly wherein B = Cr or Mn; and wherein, in particular, 0 < x ≤ 0.5 or 0 < x < 0.5.

In one embodiment according to the catalytic system of the disclosure, the oxide of formula La₁₋ₓSrₓCrO₃ is selected from the group consisting of La_{0.9}Sr_{0.1}CrO₃ and La_{0.75}Sr_{0.25}CrO₃.

In one embodiment according to the catalytic system of the disclosure, the oxide of formula La₁₋ₓSrₓMnO₃ is selected from the group consisting of La_{0.8}Sr_{0.2}MnO₃ and La_{0.5}Sr_{0.5}MnO₃. In one embodiment according to the catalytic system of the disclosure, the oxide of formula La₁₋ₓSrₓFeO₃ is selected from the group consisting of La_{0.8}Sr_{0.2}FeO₃ and La_{0.5}Sr_{0.5}FeO₃.

In one embodiment according to the catalytic system of the disclosure, the oxide of formula La₁₋ₓSrₓCoO₃ is selected from the group consisting of La_{0.8}Sr_{0.2}CoO₃ and La_{0.6}Sr_{0.4}CoO₃.

Stated differently, in certain embodiments according to the catalytic system of the disclosure, the recovery system comprises at least one oxide of formula A'₁₋ₓA"ₓBO₃, wherein A' = La, A" = Sr; B = Cr, Mn, Fe, or Co, particularly wherein B = Cr, Mn, or Fe, even more particularly wherein B = Cr or Mn, yet even more particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}MnO₃, La_{0.5}Sr_{0.5}MnO₃, La_{0.8}Sr_{0.2}FeO₃, La_{0.5}Sr_{0.5}FeO₃, La_{0.8}Sr_{0.2}CoO₃, and La_{0.6}Sr_{0.4}CoO₃.

The perovskites, such as LaCrO₃, can be doped with alkaline earth metal, particularly calcium, to obtain compounds of formula La₁₋ₓCa_{X}BO₃, wherein B = Cr, Mn, Fe, or Co, particularly wherein B = Cr, Mn, or Fe, even more particularly wherein B = Cr or Mn, or wherein B = Cr; and wherein, in particular, 0 < x ≤ 0.5 or 0 < x < 0.5. Stated differently, in particular embodiments according to the catalytic system of the disclosure, the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃ wherein, in particular, 0 < x ≤ 0.5 or 0 < x < 0.5.

In certain embodiments, the recovery system according to the present disclosure may further comprise other metals, compounds, or alloys suitable for the capture of volatile catalyst metals, such as volatile platinum group metals. Such metals or compounds include but are not limited to Au, Ag, and mixtures of alloys thereof.

In one embodiment according to the catalytic system of the disclosure, the Pt-containing, Pd-containing and/or Rh-containing catalyst is in the form of catalytic gauze, and the recovery system has the shape of a honeycomb, a tablet, a pellet, a sponge, a foam, a net, a gauze, a coating on a ceramic support or a metallic support.

Honeycomb monoliths and nets offer a large geometric surface area and very low pressure drop, which is of benefit for the gas to contact Pt, Pd and/or Rh catalytic metal or the metal oxide.

Gauzes also offer the advantage of low pressure drop, in addition to high mass transfer which favours both the catalytic conversion onto the Pd metal and the interaction of the volatile Pt, Pd and/or Rh with the metal oxide, resulting in the retaining of the volatile Pd by the metal oxide.

The shape of pellets or tablets can be adjusted and optimised such as to offer a maximised geometric surface area. Further, pellets and tablets are easy to produce, and large volumes can be easily installed and subsequently used in large sized reactors such as circular ammonia oxidation burners.

Sponges, foams, and ceramics also offer a large geometric surface area and exhibit a very low pressure drop, which is of benefit for the gas to contact either the Pd catalytic metal or the metal oxide. Moreover, sponges, foams and ceramics present the advantage of increased mass transfer with respect to other shapes.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys, and chromium-aluminium-iron alloys.

When the recovery system has the shape of a honeycomb, a tablet, a pellet or a net, the recovery system can be made by coating the metal oxide onto a support having the preferred shape. Coating of the metal oxide onto a support with a defined shape is particularly straightforward to perform and to achieve. Alternatively, the shape can be produced from a composite of the metal oxide or from the solid pure metal oxide. Examples of production from a composite of the metal oxide or the pure metal oxide are extrusion, moulding, pressing, or granulating the composite of the metal oxide or from the solid pure metal oxide.

In one aspect of the disclosure, use of a recovery system comprising at least one oxide of formula A'₁₋ₓA"ₓBO₃ with A' being selected from lanthanoids, preferably A' being selected from La, Sm and Gd; A" being selected from alkaline earth metals, preferably A" being Sr or Ca; B being selected from 3d-5d elements, preferably B being selected from Cr, Mn, Fe, and Co more preferably B being selected from Cr, Mn and Fe, or selected from Cr and Mn; and wherein x = 0 to 1, preferably wherein x = 0 to 0.5 or 0 < x < 0.5, for recovering volatile Pt, Pd and/or Rh, is disclosed.

The inventor has found that the oxides of certain metals, in particular at least one oxide of formula A'₁₋ₓA"ₓBO₃ as disclosed herein, specifically retain at least volatile Pt, Pd and/or Rh, thereby allowing to recover the volatile Pt, Pd and/or Rh that would otherwise be lost in the gas phase. The recovery is such that the oxide of formula A'₁₋ₓA"ₓBO₃ is able to bond with at least one of volatile Pt, Pd and/or Rh, forming complexes or solid compositions, as evaluated by bulk chemical analysis, particularly inductively coupled plasma spectroscopy (ICP-MS). Advantageously, the formed complexes or solid compositions are stable upon shutdown of the reactor and upon exposure to ambient temperature and ambient air. The complexes or solid compositions do not hydrate and do not become brittle or dusty. Thereby, both emissions in the air and loss of precious and expensive metals are mitigated.

In one embodiment according to the use of the disclosure, volatile Pt, Pd and/or Rh is generated from the catalytic oxidation of ammonia into nitric oxide or wherein volatile Pt, Pd and/or Rh is generated from the catalytic reaction of ammonia with oxygen and methane, thereby generating hydrogen cyanide.

In one embodiment according to the use of the disclosure, the recovery system comprises at least one oxide of formula A'BO₃ when x = 0, A' = La, Sm or Gd, B = Cr, Mn, Fe or Co, particularly wherein B = Cr, Mn or Fe, even more particularly wherein B = Cr or Mn, yet even more particularly wherein the at least one oxide of formula A'BO₃ is selected from the group consisting of LaCrO₃, LaMnO₃, SmCrO₃ and GdCrO₃.

In one embodiment according to the catalytic system of the disclosure, the oxide of formula A'BO₃ is in a form of a perovskite.

In the context of the invention "perovskite" is to be understood as meaning that a perovskite is a compound, ABX₃, that belong to the class of compounds that take a perovskite type structure. When X = O, the perovskite is an oxide ABO₃. In the ideal perovskite structure, the B-site cation is 6-coordinated to oxygen and A-site is 12-coordinated to oxygen. A site cation is generally from alkali earth, alkaline earth, and rare earth elements whereas B site cation is generally selected from 3d-5d elements, p-block elements. The perovskite oxide can have lower symmetry, being distorted, and may have oxygen vacancies in random or ordered patterns.

As known to the skilled person, the A'BO₃ perovskites can be doped with alkaline earth metals, wherein alkaline earth metal atoms are intentionally introduced in the A'BO₃ perovskite, to form the doped oxides of A'BO₃ perovskites. The doped oxides of A'BO₃ perovskites can be of the formula A'₁₋ₓA"ₓBO₃, wherein, in particular, 0 < x ≤ 0.5 or 0 < x < 0.5. The doping can be carried out by the any process as known to the skilled person such as spray pyrolysis, complexation, coprecipitation, modified combustion method etc.

In the context of the present disclosure, the perovskites such as LaCrO₃, LaMnO₃, LaFeO3, LaCoO₃ were doped with alkaline earth metal, particularly strontium to obtain compounds of formula La₁₋ₓSrₓCrO₃, La₁₋ₓSrₓMnO₃, La₁₋ₓSrₓFeO₃ and La₁₋ₓSrₓCoO₃ respectively, wherein, in particular, 0 < x ≤ 0.5 or 0 < x < 0.5. Stated differently, the oxides of formula A'₁₋ₓA"ₓBO₃ are selected from the group consisting of La₁₋ₓSrₓCrO₃, La₁₋ₓSrₓMnO₃, La₁₋ₓSrₓFeO₃ and La₁₋ₓSrₓCoO₃ when A' = La, A" = Sr, B = Cr, Mn, Fe, and Co. Stated differently, in certain embodiments of the use according to the disclosure, the recovery system comprises at least one oxide of formula La₁₋ₓSrₓBO₃, wherein B = Cr, Mn, Fe, or Co, particularly wherein B = Cr, Mn, or Fe, even more particularly wherein B = Cr or Mn; and wherein, in particular, 0 < x ≤ 0.5 or 0 < x < 0.5.

In one embodiment according to the use of the disclosure, the oxide of formula La₁₋ₓSrₓCrO₃ is selected from the group consisting of La_{0.9}Sr_{0.1}CrO₃ and La_{0.75}Sr_{0.25}CrO₃.

In one embodiment according to the use of the disclosure, the oxide of formula La₁₋ₓSrₓMnO₃ is selected from the group consisting of La_{0.8}Sr_{0.2}MnO₃ and La_{0.5}Sr_{0.5}MnO₃.

In one embodiment according to the use of the disclosure, the oxide of formula La₁₋ₓSrₓFeO₃ is selected from the group consisting of La_{0.8}Sr_{0.2}FeO₃ and La_{0.5}Sr_{0.5}FeO₃.

In one embodiment according to the use of the disclosure, the oxide of formula La₁₋ₓSrₓCoO₃ is selected from the group consisting of La_{0.8}Sr_{0.2}CoO₃ and La_{0.6}Sr_{0.4}CoO₃.

Stated differently, in one embodiment according to the use of the disclosure, the recovery system comprises at least one oxide of formula A'₁₋ₓA"ₓBO₃ wherein A' = La, A" = Sr; B = Cr, Mn, Fe, or Co, particularly wherein B = Cr, Mn, or Fe, even more particularly wherein B = Cr or Mn, yet even more particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}MnO₃, La_{0.5}Sr_{0.5}MnO₃, La_{0.8}Sr_{0.2}FeO₃, La_{0.5}Sr_{0.5}FeO₃, La_{0.8}Sr_{0.2}CoO₃, and La_{0.6}Sr_{0.4}CoO₃.

The perovskites, such as LaCrO₃, can be doped with alkaline earth metal, particularly calcium to obtain compounds of formula La₁₋ₓCa_{X}BO₃, wherein B = Cr, Mn, Fe, or Co, particularly wherein B = Cr, Mn, or Fe, even more particularly wherein B = Cr or Mn, or wherein B = Cr; and wherein, in particular, 0 < x ≤ 0.5 or 0 < x < 0.5. Stated differently, in one embodiment according to the use of the disclosure, the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃, wherein, in particular, 0 < x ≤ 0.5 or 0 < x < 0.5.

In one embodiment according to the use of the disclosure, the recovery system has the shape of a honeycomb, a tablet, a pellet, a sponge, a foam, a net or a gauze, a coating on a ceramic support or a metallic support, as described elsewhere herein.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys, and chromium-aluminium-iron alloys.

In another aspect of the disclosure, a method for oxidising ammonia into nitric oxide or for reacting ammonia with oxygen and methane, thereby generating hydrogen cyanide, is disclosed. The method comprises the steps:
a) catalytically oxidising ammonia into nitric oxide, particularly in the production of nitric acid at a temperature ranging from 700 to 1100°C, more preferably from 700 to 950°C; or catalytically reacting ammonia with oxygen and methane thereby generating hydrogen cyanide, whereby volatile Pt, Pd and/or Rh is generated, particularly with a Pt-containing, Pd-containing and/or Rh-containing catalytic system;
b) contacting the volatile Pt, Pd and/or Rh generated in step a) with a recovery system comprising at least one oxide of formula A'₁₋ₓA"ₓBO₃, with A' being selected from lanthanoids, preferably A' being selected from La, Sm and Gd, A" being selected from alkaline earth metals, preferably A" being Sr or Ca, B being selected from 3d-5d elements, preferably B being selected from Cr, Mn, Fe, and Co, more preferably B being selected from Cr, Mn and Fe, or selected from Cr and Mn, wherein x = 0 to 1, preferably wherein x = 0 to 0.5 or 0 < x ≤ 0.5; and
c) forming a solid composition comprising the at least one oxide and volatile Pt, Pd and/or Rh, wherein said oxide is bonded with volatile Pt, Pd and/or Rh.

In one embodiment according to the method of the disclosure, the method further comprises the step of d) recovering volatile Pt, Pd and/or Rh from the solid composition comprising at least one oxide and volatile Pt, Pd and/or Rh.

The inventor has found that the oxides of certain metals, in particular at least one oxide of formula A'₁₋ₓA"ₓBO₃ as disclosed herein, specifically retain at least volatile Pt, Pd and/or Rh, thereby allowing to recover the volatile Pt, Pd and/or Rh that would otherwise be lost in the gas phase. The recovery is such that the oxide of formula A'₁₋ₓA"ₓBO₃ is able to bond with at least one of volatile Pt, Pd and/or Rh, as evaluated by bulk chemical analysis, particularly inductively coupled plasma spectroscopy (ICP-MS), forming complexes or solid compositions. Advantageously, the formed complexes or solid compositions are stable upon shutdown of the reactor and upon exposure to ambient temperature and ambient air. The complexes or solid compositions do not hydrate and do not become brittle or dusty. Thereby, both emissions in the air and loss of precious and expensive metals are mitigated.

In one embodiment according to the method of the disclosure, in step b) the recovery system comprises at least one oxide of formula A'BO₃ when x = 0, wherein A' = La, Sm or Gd, B = Cr, Mn, Fe or Co, particularly wherein B = Cr, Mn or Fe, even more particularly wherein B = Cr or Mn, yet even more particularly wherein the at least one oxide of formula A'BO₃ is selected from the group consisting of LaCrO₃, LaMnO₃, SmCrO₃ and GdCrO₃.

In one embodiment according to the method of the disclosure, in step b) the oxide of formula A'BO₃ is in a form of a perovskite.

In the context of the invention "perovskite" is to be understood as meaning that a perovskite is a compound, ABX₃, that belong to the class of compounds that take a perovskite type structure. When X = O, the perovskite is an oxide ABO₃. In the ideal perovskite structure, the B-site cation is 6-coordinated to oxygen and A-site is 12-coordinated to oxygen. A site cation is generally from alkali earth, alkaline earth, and rare earth elements whereas B site cation is generally selected from 3d-5d elements, p-block elements. The perovskite oxide can have lower symmetry, being distorted, and may have oxygen vacancies in random or ordered patterns.

In certain embodiments, the A'BO₃ perovskites as disclosed herein were doped with alkaline earth metals, particularly strontium, to form the oxides of formula A'₁₋ₓA"ₓBO₃, wherein, in particular, 0 < x ≤ 0.5 or 0 < x < 0.5. The doping can be carried out by the any process as known to the skilled person.

In the context of the present disclosure, the perovskites of LaCrO₃, LaMnO₃, LaFeO3, LaCoO₃ were doped with strontium to obtain compounds of formula La₁₋ₓSrₓCrO₃, La₁₋ₓSrₓMnO₃, La₁₋ₓSrₓFeO₃ and La₁₋ₓSrₓCoO₃ respectively, wherein, in particular, 0 < x ≤ 0.5 or 0 < x < 0.5. Stated differently, the oxides of formula A'₁₋ₓA"ₓBO₃ are selected from La₁₋ₓSrₓCrO₃, La₁₋ₓSrₓMnO₃, La₁₋ₓSrₓFeO₃ and La₁₋ₓSrₓCoO₃ when A' = La, A" = Sr, B = Cr, Mn, Fe, or Co. Stated differently, in certain embodiments of the catalytic system of the disclosure, the recovery system comprises at least one oxide of formula La₁₋ₓSrₓBO₃, wherein B = Cr, Mn, Fe, or Co, particularly wherein B = Cr, Mn, or Fe, even more particularly wherein B = Cr or Mn; and wherein, in particular, 0 < x ≤ 0.5 or 0 < x < 0.5.

In one embodiment according to the method of the disclosure, in step b) recovery system comprises the oxide of formula La₁₋ₓSrₓCrO₃ selected from the group consisting of La_{0.75}Sr_{0.25}CrO₃ and La_{0.9}Sr_{0.1}CrO₃.

In one embodiment according to the method of the disclosure, in step b) recovery system comprises the oxide of formula La₁₋ₓSrₓMnO₃ selected from the group consisting of La_{0.8}Sr_{0.2}MnO₃, La_{0.5}Sr_{0.5}MnO₃.

In one embodiment according to the method of the disclosure, in step b) recovery system comprises the oxide of formula La₁₋ₓSrₓFeO₃ selected from the group consisting of La_{0.5}Sr_{0.5}FeO₃, La_{0.8}Sr_{0.2}FeO₃.

In one embodiment according to the method of the disclosure, in step b) recovery system comprises the oxide of formula La₁₋ₓSrₓCoO₃ selected from the group consisting of La_{0.8}Sr_{0.2}CoO₃, La_{0.6}Sr_{0.4}CoO₃.

Stated differently, in one embodiment according to the method of the disclosure, in step b) the recovery system comprises at least one oxide of formula A'₁₋ₓA"ₓBO₃ wherein A' = La, A" = Sr, B = Cr, Mn, Fe, or Co, particularly wherein B = Cr, Mn, or Fe, even more particularly wherein B = Cr or Mn, yet even more particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}CoO₃, La_{0.6}Sr_{0.4}CoO₃, La_{0.8}Sr_{0.2}FeO₃, La_{0.5}Sr_{0.5}FeO₃, La_{0.8}Sr_{0.2}MnO₃, and La_{0.5}Sr_{0.5}MnO₃.

The perovskites, such as LaCrO₃, can be doped with alkaline earth metal, particularly calcium, to obtain compounds of formula La₁₋ₓCa_{X}BO₃, wherein B = Cr, Mn, Fe, or Co, particularly wherein B = Cr, Mn, or Fe, even more particularly wherein B = Cr or Mn, or wherein B = Cr; and wherein, in particular, 0 < x ≤ 0.5 or 0 < x < 0.5. Stated differently, in particular embodiments according to the method of the disclosure, in step b) the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃, wherein, in particular, 0 < x ≤ 0.5 or 0 < x < 0.5.

In one embodiment according to the method of the disclosure, step a) is performed with a catalytic gauze, and step b) is performed with a recovery system that has the shape of a honeycomb, a tablet, a pellet, a sponge, a foam, a net or a gauze, a coating on a ceramic support or a metallic support.

The ceramic support is selected from but not limited to Al₂O₃, MgO, ZrO₂, yttria, magnesium or calcium stabilized zirconia, MgO, MgAl₂O₄, calcium aluminates, magnesium aluminium silicates, aluminium silicates, and silicon carbides.

The non-limiting examples of metallic support can be metal meshes, metal screens, ferritic steels, nickel-based alloys, iron-chromium-aluminium alloys, and chromium-aluminium-iron alloys.

In one embodiment according to the method of the disclosure, step a) comprises catalytically oxidising ammonia into nitric oxide at a temperature ranging from 700 to 950 °C, particularly at a pressure ranging between 2 bar and 20 bar.

In one embodiment according to the method of the disclosure, step a) comprises catalytically reacting ammonia with oxygen and methane thereby generating hydrogen cyanide, at a temperature ranging from 700 to 1100 at pressures °C, more preferably from 1000 to 1100°C.

### EXAMPLES

### Example 1: use of LaCrO₃ for Pt, Pd and Rh catchment

Lanthanum chromite perovskite (LaCrO₃) was pressed into pellets of 10mm diameter and 5mm thickness. The pellets were sintered at 1300°C for 4hours. Two pellets were installed downstream of Pt, Pd and Rh-containing catalyst gauzes in an ammonia oxidation reactor. One pellet was retained as a fresh reference sample. The reactor was operated at 5 bara pressure and the combusted gas contacting the LaCrO₃ tablet was at 900°C, containing circa 10% NO, 15% H₂O, 6% O₂ and nitrogen. In addition to these gases, the gas contained traces of volatile platinum, palladium, and rhodium. The reactor was operated for a 7 months campaign. After this period of exposure, a pellet was recovered from the reactor for analysis. Prior to installation in the reactor, the lower side of the pellet had been marked, so that after exposure the upper side of the pellet that had most direct contact with the incoming flow of combusted gas (upper surface) could be identified. Analysis in an ICP-MS instrument was carried out. The elemental concentrations of Pt, Pd and Rh are shown in Table 1.

**Table 1. ICP-MS analysis of the LaCrO₃ pellet**

| **Oxide** | **Elemental concentrations mg/kg** | | |
|---|---|---|---|
| | **Pt** | **Pd** | **Rh** |
| LaCrO₃ | 1183 | 3162 | 614 |

These results show that Pt, Pd and Rh were recovered. Without being bound by theory, the rationale behind the capture of Pt, Pd and Rh by LaCrO₃ perovskite can be explained. The evaporation rate of chromium from LaCrO₃ is expected to be greater than lanthanum, thus creating B-site cation vacancies that could be filled by precious metal cations, facilitating the capture of Pt, Pd and Rh in the LaCrO₃. This results in formation of respective solid compositions

## Claims

1. A catalytic system comprising:
- a Pt-containing, Pd-containing, and/or Rh-containing catalyst; and
- a recovery system downstream of the catalyst;
wherein the recovery system comprises at least one oxide of formula A'₁₋ₓA"ₓBO₃, with:
° A' being selected from lanthanoids, preferably A' being selected from La, Sm and Gd;
° A" being selected from alkaline earth metals, preferably A" being Sr or Ca;
° B being selected from 3d-5d elements, preferably B being selected from Cr, Mn, Fe, and Co; and
° x = 0 to 1.

2. The catalytic system according to claim 1, wherein the recovery system comprises at least one oxide of formula A'BO₃ when x = 0, A' = La, Sm or Gd, B = Cr, Mn, Fe or Co, particularly wherein the at least one oxide of formula A'BO₃ is selected from the group consisting of LaCrO₃, LaMnO₃, SmCrO₃ and GdCrO₃.

3. The catalytic system according to claim 1, wherein the recovery system comprises at least one oxide of formula A'₁₋ₓA"ₓBO₃ wherein A' = La, A" = Sr; B = Cr, Mn, Fe, or Co, particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}MnO₃, La_{0.5}Sr_{0.5}MnO₃, La_{0.8}Sr_{0.2}FeO₃, La_{0.5}Sr_{0.5}FeO₃, La_{0.8}Sr_{0.2}CoO₃, and La_{0.6}Sr_{0.4}CoO₃.

4. The catalytic system according to claim 1, wherein the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃.

5. The catalytic system according to claims 1 to 4, wherein the catalytic system is a system for the catalytic conversion of ammonia into nitric oxide, for the generation of nitric acid, or wherein the catalytic system is a system for the catalytic conversion of ammonia, oxygen and methane, for the generation of hydrogen cyanide.

6. Use of a recovery system comprising at least one oxide of formula A'₁₋ₓA"ₓBO₃ for recovering volatile Pt, Pd and/or Rh, with:
° A' being selected from lanthanoids, preferably A' being selected from La, Sm and Gd;
° A" being selected from alkaline earth metals, preferably A" being Sr or Ca;
° B being selected from 3d-5d elements, preferably B being selected from Cr, Mn, Fe, and Co; and
° wherein x = 0 to 1.

7. The use according to claim 6, wherein the recovery system comprises at least one oxide of formula A'BO₃ when x = 0, and wherein A' = La, Sm or Gd, B = Cr, Mn, Fe or Co, particularly wherein the at least one oxide of formula A'BO₃ is selected from the group consisting of LaCrO₃, LaMnO₃, SmCrO₃ and GdCrO₃.

8. The use according to claim 6, wherein the recovery system comprises at least one oxide of formula A'₁₋ₓA"ₓBO₃ wherein A' = La, A" = Sr, B = Cr, Mn, Fe, or Co, particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}MnO₃, La_{0.5}Sr_{0.5}MnO₃, La_{0.8}Sr_{0.2}FeO₃, La_{0.5}Sr_{0.5}FeO₃, La_{0.8}Sr_{0.2}CoO₃, and La_{0.6}Sr_{0.4}CoO₃.

9. The use according to claim 6, wherein the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃.

10. A method for oxidising ammonia into nitric oxide or for reacting ammonia with oxygen and methane, thereby generating hydrogen cyanide, comprising the steps of:
a) catalytically oxidising ammonia into nitric oxide, particularly in the production of nitric acid at a temperature ranging from 700 to 1100°C, more preferably from 700 to 950°C; or catalytically reacting ammonia with oxygen and methane, particularly in production of hydrogen cyanide, whereby volatile Pt, Pd and/or Rh is generated, particularly with a Pt-containing, Pd-containing and/or Rh-containing catalytic system;
b) contacting the volatile Pt, Pd and/or Rh generated in step a) with a recovery system comprising at least one oxide of formula A'₁₋ₓA"ₓBO₃, with A' being selected from lanthanoids, preferably A' being selected from La, Sm and Gd, A" being selected from alkaline earth metals, preferably A" being Sr or Ca, B being selected from 3d-5d elements, preferably B being selected from Cr, Mn, Fe, and Co, wherein x = 0 to 1; and
c) forming a solid composition comprising the at least one oxide and volatile Pt, Pd and/or Rh, wherein said oxide is bonded with volatile Pt, Pd and/or Rh.

11. The method according to claim 10, further comprising the step of d) recovering volatile Pt, Pd and/or Rh from the solid composition comprising at least one oxide and volatile Pt, Pd and/or Rh.

12. The method according to claim 10, wherein in step b) the recovery system comprises at least one oxide of formula A'BO₃ when x = 0, wherein A' = La, Sm or Gd, B = Cr, Mn, Fe or Co, particularly wherein the at least one oxide of formula A'BO₃ is selected from the group consisting of LaCrO₃, LaMnO₃, SmCrO₃ and GdCrO₃.

13. The method according to claim 10, wherein in step b) the recovery system comprises at least one oxide of formula A'₁₋ₓA"ₓBO₃ wherein A' = La, A" = Sr, B = Cr, Mn, Fe, or Co, particularly wherein the oxide of formula A'₁₋ₓA"ₓBO₃ is selected from the group consisting of La_{0.9}Sr_{0.1}CrO₃, La_{0.75}Sr_{0.25}CrO₃, La_{0.8}Sr_{0.2}CoO₃, La_{0.6}Sr_{0.4}CoO₃, La_{0.8}Sr_{0.2}FeO₃, La_{0.5}Sr_{0.5}FeO₃, La_{0.8}Sr_{0.2}MnO₃, and La_{0.5}Sr_{0.5}MnO₃.

14. The method according to claim 10, wherein in step b) the recovery system comprises at least one oxide of formula A'₁₋ₓA"ₓBO₃ wherein A' = La, A" = Ca; B = Cr, particularly wherein the oxide of formula A'₁₋ₓA"ₓBO₃ is La₁₋ₓCaₓCrO₃.

15. The method according to any one of claims 10 to 14, wherein step a) is performed with a catalytic gauze, and wherein step b) is performed with a recovery system that has the shape of a honeycomb, a tablet, a pellet, a sponge, a net, a gauze, a coating on a ceramic support or a metallic support.
